# EUROPÄISCHE PATENTANMELDUNG

(11) **EP 0 795 391 A2**
(43) Veröffentlichungstag der Anmeldung: **17.09.1997**
(21) Anmeldenummer: 97101961.7
(22) Anmeldetag: 07.02.1997
(51) Int. Cl.: B29C 53/10

(54) **Vorrichtung zum Flachlegen eines Folienschlauches**

(30) Priorität: 12.03.1996 DE 19609638
(71) Anmelder: Windmöller & Hölscher, D-49525 Lengerich (DE)
(72) Erfinder: Linkies, Jürgen, 49536 Lienen (DE); Sensen, Klemens, 49525 Lengerich (DE)

(57) **Zusammenfassung**

Eine Vorrichtung zum Flachlegen eines aus einer in einer Blasfolienanlage erzeugten, aufgeblasenen Folienblase abgezogenen Folienschlauches (10) besteht aus die Folienblase begrenzenden und keilförmig an diese angestellten Flachlegeplatten, die den Abquetschwalzen (8,9) einer Folienabzugs- und Aufwickeleinrichtung vorgeschaltet und die mit quer zur Abzugsrichtung angeordneten Gleitstegen versehen sind. Es kann ein reversierend angetriebenes Gestell vorgesehen sein, in dem die Flachlegeplatten gehaltert, die Abquetschwalzen gelagert und um dessen Drehachse Umlenkwalzen und Wendestangen schwenkbar gelagert sind. Um die Reibung zwischen dem flachzulegenden Folienschlauch und den Flachlegeplatten insbesondere bei einem reversierenden Abzug herabzusetzen, bestehen die Gleitstege aus Hohlprofilen (24) mit dem flachzulegenden Folienschlauch zugewandten Blasluftdüsen oder Blasluftschlitzen, die durch Leitungen mit einer Blasluftquelle verbindbar sind.

## Beschreibung

Die Erfindung betrifft eine Vorrichtung zum Flachlegen eines aus einer in einer Folienblasanlage erzeugten aufgeblasenen Folienblase abgezogenen Folienschlauches, bestehend aus die Folienblase begrenzenden und keilförmig an diese angestellten Flachlegeplatten, die den Abquetschwalzen einer Folienabzugs- und Aufwickeleinrichtung vorgeschaltet und die mit quer zur Abzugsrichtung angeordneten Gleitstegen versehen sind, und vorzugsweise aus einem reversierend angetriebenen Gestell, in dem die Flachlegeplatten gehaltert, die Abquetschwalzen gelagert und um dessen Drehachse Umlenkwalzen und Wendestangen schwenkbar gelagert sind.

Um bis zu 360° reversierende Flachlegeplatten mit schwenkbaren Umlenkwalzen und Wendestangen dieser Art sind beispielsweise aus der DE-OS 20 35 584, der DE-PS 21 56 079, der DE-PS 35 06 772 und der DE-OS 43 03 952 bekannt. Die ein besseres Gleiten des Folienschlauches über die Flachlegeplatten ermöglichenden Gleitstege können aus Leisten mit reibungsarmen Oberflächen oder Beschichtungen oder aber auch aus Röllchen oder Walzen bestehen.

Trotz der gleitarmen Führung des flachzulegenden Folienschlauches auf den Flachlegeplatten, können sich Probleme beim Flachlegen des Folienschlauches daraus ergeben, daß dessen noch nicht völlig erkaltete Oberfläche klebrig ist. Insbesondere ergeben sich beim Flachlegen dann Schwierigkeiten, wenn ein reversierender Abzug vorgesehen ist, also die den Flachlegeplatten nachgeschalteten Abquetschwalzen, also reversierend um Winkel bis 360° oder aber auch kontinuierlich drehend angetrieben sind. Bei einem reversierenden Abzug tritt bei dem Flachlegen von stark haftenden oder klebenden Folienschläuchen eine unerwünschte Randfaltenbildung im oberen Bereich der Flachlegeplatten auf, die sich aus der Verdrallung des Folienschlauches bei der reversierenden Drehbewegung ergibt. Bei nicht haftenden, gut gleitenden Folien kann sich diese Verdrallung durch eine quergerichtete Gleitbewegung der Folie gegenüber den Flachlegeplatten ausgleichen. Bei stark haftenden und klebenden Folien ist dieser Ausgleich jedoch nicht möglich, weil diese zu stark an den Gleitstegen, Röllchen oder Walzen haften, so daß es vor den Abquetschwalzen zu einer unerwünschten Randfaltenbildung kommt.

Aufgabe der Erfindung ist es daher, eine Vorrichtung der eingangs angegebenen Art zu schaffen, bei der die Reibung zwischen dem flachzulegenden Folienschlauch und den Flachlegeplatten so stark herabgesetzt ist, daß es auch bei dem Flachlegen von stark haftenden und zum Kleben neigenden Folien bei einem reversierenden Abzug nicht zu einer Randfaltenbildung vor dem Einlauf des flachgelegten Folienschlauches in die Abquetschwalzen kommt.

Erfindungsgemäß wird diese Aufgabe bei einer Vorrichtung der eingangs angegebenen Art dadurch gelöst, daß die Gleitstege aus Hohlprofilen mit dem Folienschlauch zugewandten Blasluftdüsen oder Blasluftschlitzen bestehen, die durch Leitungen mit einer Blasluftquelle verbindbar sind. Die erfindungsgemäße Flachlegevorrichtung läßt sich bei flachzulegenden Folienschläuchen mit gut gleitenden Oberflächen ohne Ausblasen von Blasluft aus den Blasluftdüsen oder Blasluftschlitzen betreiben, weil die Hohlprofile selbst hinreichend gute Gleiteigenschaften besitzen.

Sind klebrige oder stark haftende Folien flachzulegen, wird aus den Blasluftdüsen oder Blasluftschlitzen Blasluft ausgeblasen, so daß der flachzulegende Folienschlauch gleichsam schwimmend zu den Abquetschwalzen geleitet wird und dadurch die Reibung so stark herabgesetzt ist, daß es auch zu einem Ausgleich in Querrichtung des zunehmend flachgelegten Folienschlauches kommt, wenn dieser durch die Abquetschwalzen reversierend abgezogen wird.

Bei bekannten Flachlegeplatten sind zwischen querverlaufenden Reihen von Rollen oder Walzen Gleitstege angeordnet, die üblicherweise aus Holzlatten bestehen. Statt dieser Gleitstege können zwischen den Reihen von Walzen oder Röllchen erfindungsgemäß die Hohlprofile angeordnet werden, die in den Fällen, in denen ohne Blasluft gearbeitet werden kann, die Funktion der bekannten Gleitstege oder Holzplatten übernehmen.

Zweckmäßigerweise bestehen die Hohlprofile aus Rohren mit Reihen von Blasluftdüsen. Die Hohlprofile können auch aus Kästen mit einer oder mehreren Reihen von Blasluftdüsen bestehen. Die Hohlprofile können auch aus mit längsverlaufenden Schlitzen versehenen Profilen bestehen.

Nach einer besonders bevorzugten Ausführungsform ist vorgesehen, daß jede Flachlegeplatte aus einem im Gestell gehalterten Rahmen besteht, in dem in parallelen Reihen und im Abstand zueinander Röllchen oder Walzen oder Leisten angeordnet sind, daß die mit Blasluftdüsen oder Blasluftschlitzen versehenen Hohlprofile an einem mit dem Rahmen verbundenen Zusatzrahmen derart gehaltert sind, daß sie zwischen die Röllchen, Walzen oder Leisten greifen, und daß der Zusatzrahmen durch verstellbare Halteeinrichtungen mit dem Rahmen ist, über die er relativ zu dem Rahmen schwenkbar und an diesen heranfahrbar und von diesem entfernbar ist. Nach dieser erfindungsgemäßen Ausgestaltung ist vorgesehen, daß der die mit Blasluftdüsen oder Blasluftspalten versehenen Hohlprofile tragende Zusatzrahmen relativ zu dem Hauptrahmen verstellbar ist, so daß die mit Blasluft beaufschlagten Hohlprofile durch Ein- oder Ausfahren des Zusatzrahmens in die gewünschte Wirkstellung gebracht werden können. Durch geringfügige Neigung des Zusatzrahmens läßt sich die Eintauchtiefe der Hohlprofile ändern, so daß diese beispielsweise von oben beginnend stärker oder schwächer in Eingriff gebracht werden können.

Zweckmäßigerweise ist der Hauptrahmen um obere Achsen schwenkbar im Gestell gelagert. Zur Einstellung des Teilwinkels der Flachlegeplatten können zusätzliche Stelleinrichtungen vorgesehen werden.

In weiterer Ausgestaltung der Erfindung ist vorgesehen, daß die Röllchen oder Walzen mit Antrieben und/oder Bremseinrichtungen versehen sind, durch die die Röllchen oder Walzen der einzelnen Reihen mit unterschiedlicher Drehzahl angetrieben und/oder abgebremst werden können. Durch den Eingriff von einzelnen angetriebenen oder gebremsten Rollen oder Walzen im unteren Bereich und aufgrund der Wirksamkeit von Luftbläsern im oberen Bereich der Flachlegung läßt sich auf diese Weise die Bahnspannung des abgezogenen Folienschlauches beeinflussen.

In weiterer Ausgestaltung der Erfindung ist vorgesehen, daß die durch die Hohlprofile ausgeblasene Luft temperiert, also gekühlt oder beheizt, ist. Auf diese Weise kann zusätzlich Einfluß auf die Folieneigenschaften genommen werden.

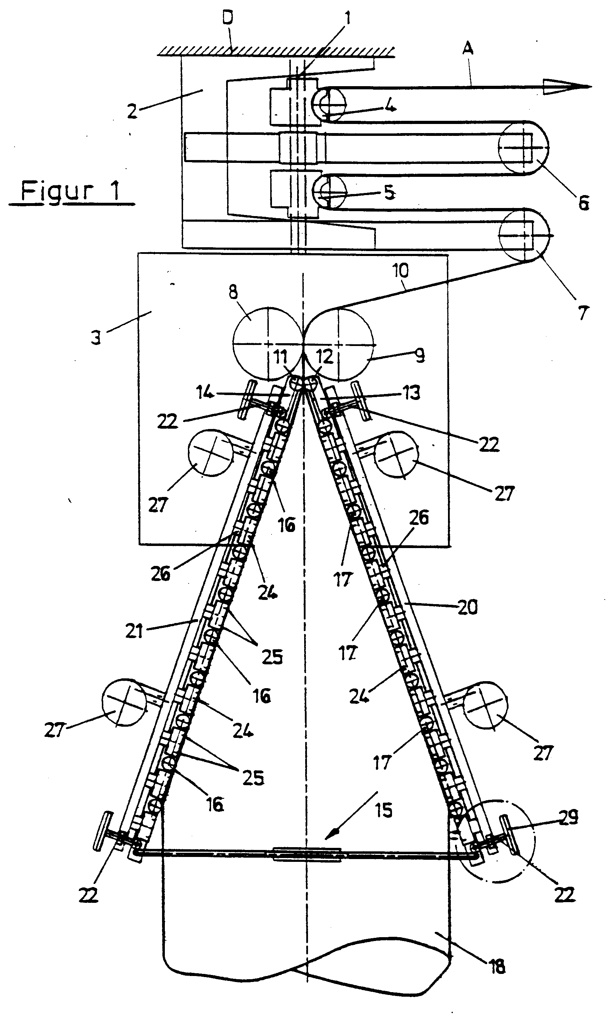

Ein Ausführungsbeispiel der Erfindung wird nachstehend anhand der Zeichnung näher erläutert. In dieser zeigt
- Fig. 1: eine Seitenansicht von Flachlegeplatten mit einer reversierenden Abzugseinrichtung in schematischer Darstellung und
- Fig. 2: eine vergrößerte Darstellung der in Fig. 1 mit einer strichpunktierten Linie eingekreisten Verstelleinrichtung.

Hängend unter einer Decke D ist ein Tragrahmen 2 angeordnet, den eine vertikale Achse 1 durchsetzt. Diese Achse trägt ein Gestell 3, das durch einen nicht dargestellten Antrieb bis zu 360° reversierend drehend um die Achse 1 angetrieben ist. In dem Gestell 3 sind mit einem üblichen Antrieb versehene Abquetschwalzen 8, 9 gelagert, die die flachgelegte Schlauchfolie 10 abziehen. Die flachgelegte Schlauchfolie 10 ist in der dargestellten Weise über die Wendestangen 4, 5 und die Umlenkwalzen 6, 7 geführt, deren Lagerungen an diese tragenden Trägern schwenkbar um die Achse 1 gelagert sind. Die reversierend abgezogene flachgelegte Schlauchfolie läuft sodann in Richtung des Pfeils A zu einer nicht dargestellten Aufwickeleinrichtung.

Insoweit ist die Vorrichtung bekannter Bauart. Zur näheren Darstellung kann auf die DE-OS 20 35 584, die DE-PS 21 56 079, die DE-PS 35 06 772 und die DE-OS 43 03 952 verwiesen werden.

Zwischen den Seitenplatten des Gestells 3 sind dicht unterhalb der Abquetschwalzen 8, 9 um die Achsen der obersten Rollen 11, 12 Rahmen 13, 14 schwenkbar gelagert. An ihren unteren Enden sind die Rahmen 13, 14 schwenkbar mit den Enden eines Spindeltriebes 15 verbunden, durch den der Keilwinkel der Rahmen 13, 14 einstellbar ist.

In den Rahmen 13, 14 sind in gleichen Abständen Reihen von weiteren Walzen 16, 17 gelagert, deren den flachzulegenden Folienschlauch 18 zugewandten Mantellinien auf einer gemeinsamen Ebene liegen.

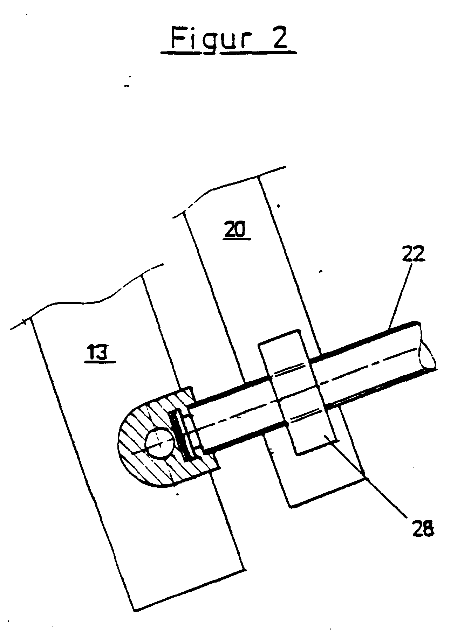

Parallel zu den Rahmen 13, 14 sind Zusatzrahmen 20, 21 vorgesehen, deren oberen und unteren Bereiche mit Verstellspindeln 22 versehen sind. Die Verstellspindeln 22 sind mit ihren unteren Enden in der aus Fig. 2 ersichtlichen Weise drehbar aber in axialer Richtung unverschieblich in Haltestücken gelagert, die mit den Rahmen 13, 14 schwenkbar verbunden sind. Die Spindelmuttern 28 sind fest an den Zusatzrahmen 20, 21 gehaltert, so daß durch Betätigung der Handräder 29 die Lage der Rahmen 20, 21 relativ zu den Rahmen 13, 14 geändert werden kann. Statt der Handräder können zur automatischen Verstellung Stelltriebe vorgesehen sein.

An den Zusatzrahmen 20, 21 sind Hohlprofile, im dargestellten Ausführungsbeispiel Kastenprofile 24 gehaltert, die in ihren in der Flachlegeebene liegenden Wandungen jeweils zwei Reihen von Blasluftdüsen bildenden Bohrungen 25 aufweisen. Die Kastenprofile 24 sind parallel zu den Walzen 16, 17 in den Spalten zwischen diesen angeordnet. Die Kastenprofile 24 sind mit Rohrstutzen 26 verbunden, über die sie von Gebläsen 27, die ebenfalls auf den Zusatzrahmen angeordnet sind, mit Blasluft versorgt werden können. Die Blasluftzufuhr erfolgt in gesteuerter Weise und kann auch vollständig unterbrochen werden.

## Patentansprüche

1. Vorrichtung zum Flachlegen eines aus eIner in einer Blasfolienanlage erzeugten, aufgeblasenen Folienblase abgezogenen Folienschlauches, bestehend
aus die Folienblase begrenzenden und keilförmig an diese angestellten Flachlegeplatten, die den Abquetschwalzen einer Folienabzugs- und Aufwickeleinrichtung vorgeschaltet und die mit quer zur Abzugsrichtung angeordneten Gleitstegen versehen sind, und vorzugsweise
aus einem reversierend angetriebenen Gestell, in dem die Flachlegeplatten gehaltert, die Abquetschwalzen gelagert und um dessen Drehachse Umlenkwalzen und Wendestangen schwenkbar gelagert sind,
dadurch gekennzeichnet,
daß die Gleitstege aus Hohlprofilen mit dem flachzulegenden Folienschlauch zugewandten Blasluftdüsen oder Blasluftschlitzen bestehen, die durch Leitungen mit einer Blasluftquelle verbindbar sind.

2. Vorrichtung nach Anspruch 1, dadurch gekennzeichnet, daß die Hohlprofile aus Rohren mit Reihen von Blasluftdüsen bestehen.

3. Vorrichtung nach Anspruch 1, dadurch gekennzeichnet, daß die Hohlprofile aus Kästen mit einer oder mehreren Reihen von Blasluftdüsen bestehen.

4. Vorrichtung nach Anspruch 1, dadurch gekennzeichnet, daß die Hohlprofile aus mit Schlitzen versehenen Profilen bestehen.

5. Vorrichtung nach einem der Ansprüche 1 bis 4, dadurch gekennzeichnet, daß jede Flachlegeplatte aus einem im Gestell gehalterten Rahmen besteht, in dem in parallelen Reihen und im Abstand zueinander Röllchen oder Walzen oder Leisten angeordnet sind,
daß die mit Blasluftdüsen oder Blasluftspalten versehenen Hohlprofile an einem mit dem Rahmen verbundenen Zusatzrahmen derart gehaltert sind, daß sie zwischen die Röllchen, Walzen oder Leisten greifen und
daß der Zusatzrahmen durch verstellbare Halteeinrichtungen mit dem Rahmen verbunden ist, über die er relativ zu dem Rahmen schwenkbar und an diesen heranfahrbar und von diesem entfernbar ist.

6. Vorrichtung nach einem der Ansprüche 1 bis 5, dadurch gekennzeichnet, daß die Flachlegeplatten um obere Achsen schwenkbar im Gestell gelagert sind.

7. Vorrichtung nach einem der Ansprüche 1 bis 6, dadurch gekennzeichnet, daß die Röllchen oder Walzen mit Antrieben und/oder Bremseinrichtungen versehen sind, durch die die Röllchen oder Walzen der einzelnen Reihen mit unterschiedlicher Drehzahl angetrieben und/oder abgebremst werden können.
